# NEW EUROPEAN PATENT SPECIFICATION

(11) **EP 2 520 792 B2**
(45) Date of publication and mention of the opposition decision: **25.04.2018**
(45) Mention of the grant of the patent: 11.09.2013
(21) Application number: 11164948.9
(22) Date of filing: 05.05.2011
(51) Int. Cl.: F03D 80/50

(54) **Hoist system and method of providing a hoist system**
Hebezugsystem und Verfahren zur Bereitstellung eines Hebezugsystems
Système d'extraction et procédé de fourniture d'un système d'extraction

(43) Date of publication of application: 07.11.2012
(73) Proprietor: Siemens Aktiengesellschaft, 80333 München (DE)
(72) Inventor: Munk-Hansen, Thorkil, 7323 Give (DK)

(56) References cited:
- WO-A1-2007/096008
- WO-A1-2008/084971
- WO-A1-2010/024510
- CA-A1- 2 699 288
- US-A1- 2010 011 575

## Description

The invention relates to a method of providing a hoist system for hoisting a wind turbine component down from or up to a nacelle of a wind turbine and to a hoist system. Such methods and hoist systems are for example known from WO 2010/024510 or CA 2 699 288.

### Background of the invention

Wind turbines are now frequently being installed as an alternative to conventional power plants that use for example fossil fuels for energy production. Onshore or offshore wind parks may include a number of wind turbines each capable of producing electric power from one to several megawatt. Wind turbines can thus make a substantial contribution to electric power generation. A wind turbine generally comprises a tower on the top of which nacelle is rotatably mounted. A yaw drive can be provided for directing the wind turbine into the wind. It further comprises a rotor including a hub to which one or several rotor blades are mounted, e.g. 3, a generator generating electric energy upon rotation of the rotor and a transformer for transforming the generated electric energy such that it can be fed into the power grid. The wind turbine may of course comprise further components, such as a gear box, inverters, control electronics and the like.

For conversion of wind energy into electrical energy, the moving air rotates the hub via the aerodynamic effect of the rotor blade, the hub turning a rotor of the generator directly or via a gear box. The electrical energy is converted to fit the conditions on the power grid by means of the transformer and a converter unit.

The nacelle of the wind turbine thus comprises several components that are relatively heavy and that need servicing. The transformer may for example be located in the nacelle. Compared to other components, transformers are frequently prone to blackouts and other problems so they are for example placed at the back end of the nacelle so as to avoid a failure in the transformer to affect other components in the nacelle. Transformers and other components of the wind turbine arranged in the nacelle are relatively heavy, they may for example weight several tons, so that exchanging these components is problematic.

Wind turbines may for example be provided with an internal crane system to hoist exchange parts or spare parts from and to the nacelle if a service or repair is required. Such crane systems are not built for lifting heavier parts, such as transformers, gear boxes or the like. The exchange of such wind turbine components is thus performed by an additional external crane which needs to be transported to the wind turbine and which needs to have a considerable size in order to reach up to the nacelle. The external crane further needs to be capable of lifting considerable weights, such as the transformer.

The exchange of such components is expensive, in particular for offshore wind turbines, which require the use of a jack-up vessel on which the crane is installed. The time of using a crane is expensive, and the exchange of a wind turbine component can only be performed in good weather conditions, as otherwise, the load will swing due to the wind. The use of an external crane furthermore requires advanced planning and transportation.

Furthermore, a down time of the wind turbine results in a loss of income. Bad weather conditions can lead to a prolonged down time as the exchange of the faulty component is impossible, which can in turn result in a substantial loss of money.

### Summary

Accordingly, there is a need for facilitating the lowering or lifting of a wind turbine component from/to the nacelle of a wind turbine, and to make such a service operation more effective and cost efficient, in particular to avoid the use of an external crane.

This need is met by the features of the independent claims. The dependent claims describe embodiments of the invention.

An aspect of the invention relates to a method of providing a hoist system for hoisting a wind turbine component down from or up to a nacelle of a wind turbine. The nacelle of the wind turbine comprises an opening in the lower part of the nacelle to the outside. The method comprises the steps of providing a winch, providing at least one deflection roller in the nacelle and guiding a winch cable of the winch through a tower of the winch turbine and through the nacelle by means of the at least one deflection roller. Further, the winch cable is attached to the wind turbine component and the wind turbine component is lowered or raised through the opening in the nacelle by means of the winch.

By providing a suitable winch and guiding the winch cable through the tower over the at least one deflection roller to the component to be moved, heavy loads can be lowered or lifted without requiring an external crane. By guiding the winch cable through the tower, it is not exposed to weather conditions, so that a swinging of the cables e.g. due to strong winds can be prevented. The wind turbine component may thus be hoisted even in heavier weather conditions.

According to the invention, the method further comprises the step of attaching at least one spacer to the wind turbine component, wherein the spacer is adapted to maintain a minimum distance between the tower of the wind turbine and the wind turbine component when the wind turbine component is lowered or raised along the tower. The tower may have a conical shape, and the spacer may be adapted to guide the winch turbine component along the tower. During lowering, the wind turbine component may initially not touch the tower by means of the spacer, but may do so at a later stage when lowered further down. By establishing a contact between the wind turbine component and the outer surface of the tower by means of the spacer, a swinging of the wind turbine component can be prevented. Furthermore, as the wind turbine component is lowered further down, the force applied thereto by the tower via the spacer increases for a conical tower, so that higher forces are applied for longer distances between the suspended wind turbine component and the nacelle. Swinging or other movements of the wind turbine component may thus efficiently be reduced, thereby enabling a hoisting of the wind turbine component even in heavier weather conditions. The spacer may be formed so as to provide the guide effect by the wind turbine tower, or two spacers or even more spacers may be used in order to provide guidance by the tower. As the at least one spacer is configured to maintain the minimum distance, a direct contact between the wind turbine component and the tower can furthermore be prevented.

The spacer may comprise a roller, in particular at the end of the spacer facing the tower. The roller may then roll along the outer surface of the tower when the spacer touches the tower (via the roller) during the lowering or raising of the wind turbine component. Other implementations of the spacer are certainly conceivable, the spacer may for example be configured to slide along the outer surface of the tower. The roller may provide an additional guidance effect and may reduce the friction between the spacer and the tower.

The spacer may comprise two or more legs that extend from the wind turbine component towards the tower, e.g. orthogonally. The method may further comprise the step of pulling the winch cable from the winch up to the nacelle by means of a service crane or hoist mounted to the nacelle. The winch may be provided by positioning the winch inside the tower of the wind turbine, e.g. at the base of the tower, or outside the tower of the wind turbine, e.g. on a base platform or on a vessel located in proximity to the wind turbine. Making use of a crane or a hoist internal to the nacelle facilitates the transportation of the winch cable up to the nacelle and guiding the winch cable over the at least one pulley to the wind turbine component.

The opening in the nacelle may be a hatch that is ranged below the wind turbine component. The opening may furthermore be sized so that the wind turbine component can be passed therethrough. The method may further comprise the step of opening the hatch before lowering or raising the wind turbine component.

The at least one deflection roller may comprise a deflection roller that is arranged above the wind turbine component. It may furthermore comprise a second deflection roller that is arranged above the tower of the wind turbine.

The method may further comprise the step of applying a force to the wind turbine component or to the winch cable attached thereto for increasing the distance between the tower of the wind turbine and the wind turbine component when lowering or raising the wind turbine component. The force can be provided so as to enable a lowering or raising of the turbine component to or from a position spaced away from the base of the tower. For example in an offshore application, the wind turbine component may be lowered or raised from a vessel positioned adjacent to the wind turbine. An additional transportation step of the wind turbine component, e.g. from a base platform of the tower to the vessel, may thus be avoided. It should be clear that the wind turbine component may also be landed at the base of the tower.

The force may for example be applied by means of a pivotable arm mounted to the tower of the wind turbine or by means of a winch cable of another second winch mounted on a vessel that is located adjacent to the wind turbine. The pivotable arm may for example be a hydraulically operated beam. In one position, the arm may abut, the tower and in an extended position, the arm may extend from the tower in the direction of the winch cable. It may comprise a guiding pulley at its end which touches the winch cable and applies a force thereto. In other configurations, the cable of a tension winch which applies a constant pulling force may be attached to the component or the winch cable from which the component is suspended in order to pull the component away from the tower.

According to a further aspect of the invention, a hoist system for hoisting a wind turbine component down from or up to a nacelle of a wind turbine is provided, wherein the nacelle of the wind turbine comprises an opening in the lower part of the nacelle to the outside. The hoist system comprises a winch, at least one deflection roller mounted inside the nacelle and a winch cable of the winch. The winch cable is guided through a tower of the wind turbine and through the nacelle by means of the at least one deflection roller, wherein the winch cable is attachable to the wind turbine component. The system is configured so as to enable a lowering or raising of the wind turbine component through the opening in the nacelle by an operation of the winch.

With the hoist system, similar advantages as the ones outlined further above with respect to the method may be achieved.

In an embodiment, the winch of the hoist system is installed inside the tower of the wind turbine, in particular at the base of the tower, or is installed outside the tower of the wind turbine. It may for example be installed on a base platform of the tower or on a vessel that is moored adjacent to the wind turbine.

According to the invention, the hoist system further comprises at least one spacer that is adapted to be mounted to the wind turbine component. The spacer is furthermore adapted to maintain a minimum distance between the tower of the wind turbine and the wind turbine component when lowering or raising the wind turbine component so as to enable the lowering or raising of the component to or from a position spaced away from the base of the tower. Again the wind turbine component may be lowered or raised from a vessel, or may be landed at the base of the tower.

In an embodiment, the hoist system may further comprise a deflection device adapted to apply a force to the wind turbine component or to the winch cable attached thereto for increasing the distance between the tower of the wind turbine and the wind turbine component when lowering or raising the wind turbine component so as to enable the lowering or raising of the component to or from, respectively, a position spaced away from the base of the tower. The deflection device may be adapted so as to enable the lowering/raising of the component to/from a position on a vessel or vehicle located adjacent to the base of the tower.

The deflection device may for example be a pivotable arm mounted to the tower of the wind turbine or a winch mounted on a vessel that is located adjacent to the wind turbine. In an onshore application, the winch may also be mounted on a vehicle, e.g. a vehicle that can be used for transporting the wind turbine component. Again, the pivotable arm may be a hydraulic beam, which can be provided with a guide pulley at its end, and the winch may be a tension winch or the like.

In an embodiment, the hoist system comprises at least two deflection rollers mounted inside the nacelle. It may certainly comprise further deflection rollers, e.g. deflection roller located at the base of the tower for guiding the winch cable towards a winch located outside the tower or the like.

The opening in the nacelle may be arranged below the wind turbine component to be lowered, and the at least one deflection roller may comprise a roller arranged above the wind turbine component and a roller arranged above the upper end of the tower of the wind turbine. It thus requires only a small effort to guide the winch cable from the tower through the nacelle toward the component.

The component may for example be a transformer. The component may have a weight of above 1 ton, for example more that 5 tons or even more than 10 tons, e.g. between 1 and 50 tons.

The hoist system may be adapted to perform any of the method steps described further above. Similarly, the above method may be carried out by means of the above described hoist system. The features of the aspects and embodiments of the invention described above and those yet to be explained further below can be combined with each other and less noted to the contrary.

### Brief description of the drawings

The foregoing and other features and advantages of the invention will become further apparent form the following detailed description read in conjunction with the accompanying drawings. In the drawings, like reference numerals refer to like elements.
Figure 1 shows a schematic drawing illustrating a wind turbine implementing a hoist system according to an embodiment of the invention.
Figure 2 shows a schematic drawing illustrating a wind turbine implementing a hoist system in accordance with a further embodiment of the invention, wherein a state is shown in which the wind turbine component which is hoisted is pushed away from the tower of the wind turbine.
Figure 3 is a flow diagram illustrating a method according to an embodiment of the invention.

### Detailed description

In the following, the embodiments illustrated in the accompanying drawings are described in more detail. It is to be understood that the following description is only illustrative and non-restrictive. The drawings are only schematic representations, and the elements in the drawings are not necessarily to scale with each other. Furthermore, the drawings only show a limited number of components, or parts of components, and it is to be understood that further components not shown in the drawings may be present. The components shown are selected in order to facilitate the understanding of the illustrated embodiments.

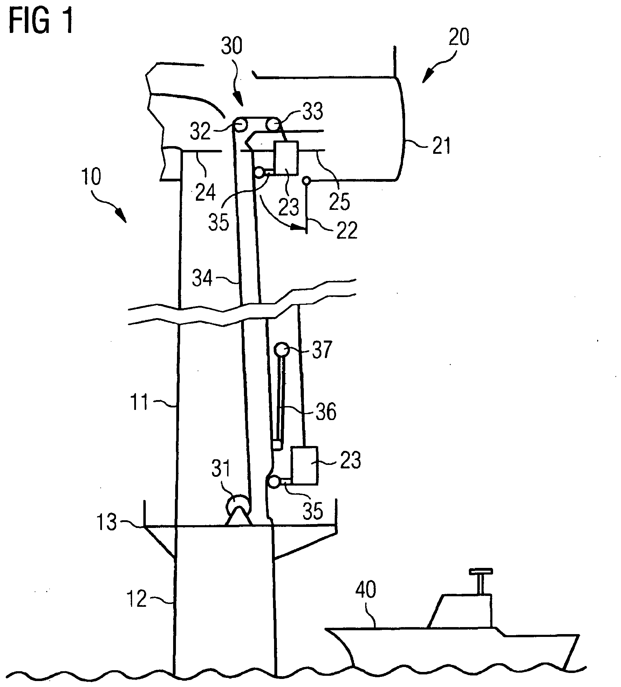

Figure 1 shows a sectional side view of a wind turbine 10. Wind turbine 10 comprises a tower 11, a tower base 12 and a base platform 13. To the top of the tower 11, a nacelle 20 is rotatably mounted, and yaw drives may be provided for orienting the nacelle 20 into the wind. For reasons of comprehensiveness, internal components, such as a main shaft, a generator, a gear box and the like, as well as the rotor and hub are not illustrated. Preferably, wind turbine 10 is a direct drive wind turbine, e.g. a wind turbine not requiring the use of a gear box.

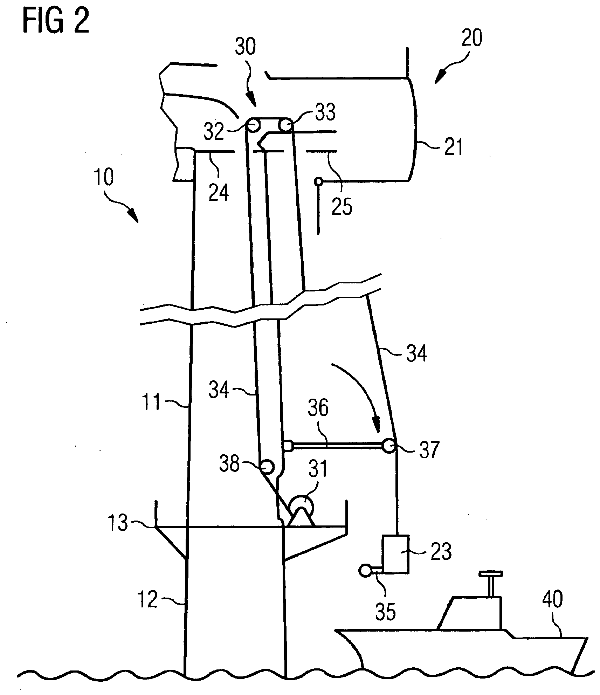

The nacelle 20 comprises a canopy 21, a bed frame 24 and a support structure 25 mounted to the bed frame. Further components of the wind turbine may be mounted to the bed frame 24 or the support structure 25, such as wind turbine component 23. In the example of figure 1 and 2, the wind turbine component 23 is a transformer. The wind turbine component 23 is removably mounted to support structure 25, which may comprise steel beams or the like.

Hoist system 30 is provided in the wind turbine 10. Hoist system 30 comprises a winch 31 which in the present example is located inside the tower 11, but may also be provided at different positions, e.g. outside tower 11 on the base platform 13, as illustrated in figure 2, or on the vessel 40. From the winch 31, winch cable 34 extends through the tower 11 and is guided by the deflection rollers 32 and 33 towards the wind turbine component 23. Note that figures 1 and 2 only show the upper part and the lower part of wind turbine 10, with the middle part being omitted.

Winch cable 34 can be attached to wind turbine component 23. For this purpose, a corresponding fastening member may be provided on wind turbine component 23, such as one or more lifting brackets or eye bolts attached thereto. The upper end of winch cable 34 may be provided with a hook, a shackle or the like, which can be attached to the fastening member provided on wind turbine component 23.

Furthermore, in the embodiments illustrated in figures 1 and 2, a spacer 35 is provided, which is attached to the wind turbine component 23. The spacer keeps the wind turbine component 23 away from the tower 11 when it is raised or lowered along the tower. Two such spacers may for example be mounted to the wind turbine component 23, so that at lower sections of tower 11, wind turbine component 23 is stably supported against the tower 11. The one or more spacers may for example be provided with sliding members at their respective ends which are adapted to slide along the surface of the tower 11. The sliding member attached to the end of the spacer may for example be made out of wood, a plastic material or the like. In other configurations, a roller may be provided at the end of the spacer, which rolls along tower 11 when lowering or raising wind turbine component 23. The friction between the spacer 35 and the tower 11 can thus be reduced. Note that the spacer 35 can be provided in different configurations, such as only one spacer having one or several rollers, and thus contact points to tower 11, or plural spaces, which each spacer only having a single point of contact with tower 11.

In the configuration illustrated in figures 1 and 2, the spacer 35 is configured so that the spacer attached to wind turbine component 23 immediately comes into contact with a tower 11 as soon as the wind turbine component 23 is lowered through hatch 22 provided in canopy 21. Spacer 25 is configured to guide the wind turbine component 23 along the outer surface of the tower 11 and thus provides a minimum clearance between the component 23 and the tower 11. In case of a conically shaped tower 11, the diameter of the tower at which the spacer 35 abuts the tower becomes larger the lower the component 23 is located, thus increasing the deflecting force on spacer 35 and component 23. Spacer 35 thus provides a guidance that becomes stronger with an increasing distance between component 23 and nacelle 20. The tendency of component 23 to swing on the winch cable 34 at larger distances can thus effectively be countered.

The lower part of figure 1 illustrates the situation in which the component 23 is located slightly above the base platform 13. As can be seen, the spacer 35 abuts the buts the tower 11 and provides a sufficient clearance between the tower and the component 23.

In the configuration illustrated in figure 1, the deflection roller 32 is located above the tower 11, so as to deflect winch cable 34 coming form winch 31 towards the component 23. The second deflection roller 33 is located above the component 23, so that the winch cable 34 can be deflected down towards the fastening member attached to component 23. The locations of the deflection rollers 32 and 33 may be adjustable, so that their position can be adapted to the position of winch 31 and the position of component 23. It should be clear that further deflection rollers may be provided in nacelle 20 in order to guide the winch cable 34 to the desired location. Deflection rollers 32 and 33 are configured and are mounted such that they are capable of carrying the load that the component 23 applies to the winch cable 34 when component 23 is raised or lowered. Note that it is also possible to share the load among several rollers. One or more rollers may also be provided on top of component 23, so as to hoist component 23 in a block and tackle fashion.

Hoist system 30 may optionally comprise the pivotable arm 36, at the end of which a guide pulley 37 is mounted. Pivotable arm 36 is explained in more detail with respect to figure 2.

Winch 31 is adapted to provide a pulling force that is high enough to lift the wind turbine component 23. As component 23 is generally rather heavy, e.g. one to several tons, winch 31 has substantial size and weight. Accordingly, it is advantageous that the winch is installed close to the base of the tower, and not in the nacelle 20, in which space is limited. Furthermore, winch 31 can be installed permanently, or may be transportable so that it can be installed where needed and can be taken back out after use. One winch 31 may thus be used with different wind turbines 10.

Figure 2 comprises components similar to the ones described with respect to figure 1, so the explanations given above are equally applicable to the wind turbine 10 and the hoist system 30 of figure 2. Figure 2 illustrates a slightly modified configuration in which winch 31 is located outside the tower 11. Winch 31 is mounted to base platform 13. Hoist system 30 comprises a further deflection roller 38 arranged in the lower part of tower 11. Roller 38 deflects the winch cable 34 towards the upper part of tower 11 and thus guides the winch cable 34 together with deflection roller 32 from winch 31 towards the inside of nacelle 20. Another configuration that is conceivable is the installation of winch 31 on vessel 40. Further deflection rollers may then be provided, e.g. on base platform 13, that guide the winch cable from the winch towards the tower, and up through the tower towards the component 23.

Figure 2 illustrates a situation in which a wind turbine component 23 is directly raised or lowered from vessel 40. For directly lowering component 23 onto vessel 40, a distance between the component 23 and tower 11 needs to be provided that is large enough so that component 23 can safely pass the base platform 13. For this purpose, the pivotable arm 36 is provided. While in figure 1, the pivotable arm is illustrated in a retracted position in which a landing of component 23 on platform 13 is enabled, figure 2 illustrates the pivotable arm 36 in an extended position in which roller 37 provided at its end is in contact with the winch cable 34.

Pivotable arm 36 can be operated hydraulically. When the component 23 is lowered towards a particular position, the pivotable arm 36 can be swung out and brought into contact with winch cable 34. It may then be pushed further out whereby a force is applied to the winch cable 34, so that the component 23 is pushed away from tower 11. In figure 2, a fully extended position of pivotabel arm 36 is illustrated, in which the pivotabel arm 26 protrudes almost orthogonally from tower 11. Arm 36 is made long enough so that the component 23 can pass the platform 13. In particular, it may be sized so as to protrude further from tower 11 then platform 13. By lowering component 23 directly onto vessel 40 or lifting component 23 directly from vessel 40, a further transportation step in which the component 23 would need to be lifted from vessel 40 to platform 13 can be avoided.

Other possibilities of providing a direct lift of component 23 to vessel 40 are also conceivable. A tension winch may be provided on vessel 40, a winch cable of which may be attached to component 23 or to the winch cable 34 above component 23. By pulling in the cable of the tension winch, the component 23 can be pulled away from tower 11 and thus lowered onto vessel 40. By using a tension winch, which applies a constant pulling force, it can be ensured that even if vessel 40 moves due to wind or current, a swinging of component 23 can be avoided.

In both embodiments, the force applied to the winch cable 34 by the wind turbine component 23 is deflected by the deflection roller 32, 33 mounted inside nacelle 20. No external means, such as an external crane or a nacelle mounted crane are thus required to lift the component 23.

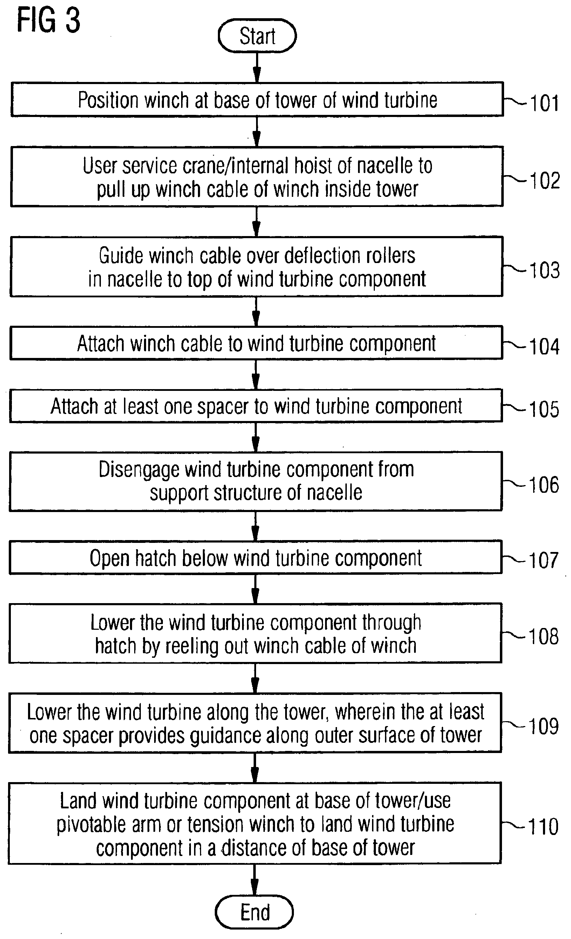

Figure 3 shows a flow diagram illustrating a method according to an embodiment of the invention, which can be carried out by means of the hoist system illustrated in figures 1 or 2. The embodiments illustrated in figures 1 and 2 can be adapted so as to perform the method of figure 3. In a step 101 of the method, the winch 31 is positioned at the base of the tower of the wind turbine, e.g. it is installed inside or outside the wind turbine. A service crane or an internal hoist of the nacelle is used in step 102 to pull the cable of winch 31 up to the nacelle inside the tower 11. In the example of figure 2, the cable would for example be guided by deflection roller 38 when being pulled up, while in figure 1, it can be directly pulled up from the winch although it is certainly possible to also provide deflection rollers for guiding the cable inside the tower.

In the nacelle, the winch cable is guided over one or more deflection rollers mounted to the nacelle (step 103). The winch cable can be placed on the deflection rollers which guide the winch cable toward the wind turbine component 23. In step 104, the winch cable is attached to the wind turbine component. As mentioned above, this can be performed by engaging a hook at the end of the winch cable with a fastening member provided on the wind turbine component, by using a shackle or the like. In step 105, at least one spacer is attached to the wind turbine component. In other embodiments, the wind turbine component may already be provided with a spacer attached thereto. The spacer is configured to provide guidance along the outer surface of the tower of the wind turbine during lowering or raising the component.

In step 106, the wind turbine component is disengaged from a support structure of the nacelle. The support structure can comprise steel beams adjacent to the wind turbine component 23 towards which it is bolted. This mechanical connection is disengaged in step 106.

In step 107, the hatch located below the wind turbine component is opened. The hatch may either be hinged to the canopy, or the hatch may comprise a closure that is bolted to the canopy.

The wind turbine component is lowered through the hatch by reeling out of winch cable of winch 31 in step 108. When the component is lowered through the hatch, the spacer is not jet in contact with the tower. When the component is lowered further down, the diameter of the tower increases, so that the spacer comes into contact with the tower and applies a deflecting force to the component. When the wind turbine component is lowered along the tower, the at least on spacer thus provides guidance along the outer surface of the tower (step 109). The longer the winch cable is extended out of the nacelle, the more component 23 becomes prone to wind induced swinging. This is countered by the increasing deflection force and thus guidance is provided by the at least one spacer.

In step 110, the wind turbine component is landed at the base of the tower. It is also possible to use the pivotable arm 36 or the above mentioned tension winch to land the winch turbine component at a distance to the base of the tower, e.g. on a marine vessel or on a land vehicle. This is particularly useful in offshore locations where the wind turbine component can directly be lowered onto ship or floating platform.

It should be clear that a wind turbine component can be hoisted up to the nacelle with corresponding steps. The winch cable is then in step 103 guided out of the nacelle towards the wind turbine component located on vessel 40 or on the base platform 13, attached thereto, and then raised along the tower of the wind turbine. After it is raised through the hatch, the wind turbine component is engaged with the support structure of the nacelle. When starting the raising of the component, the pivotable arm or tension winch may be used so as to let the wind turbine component slowly approach the tower until the spacer attached to the wind turbine component touches the tower. Guidance is then provided by the spacer for hoisting up the wind turbine component.

The spacers can be legs with a roller attached at the end thereof, which extend almost in a direction to the tower that is almost orthogonal to the outer surface of the tower.
By means of embodiments of the method and of the hoist system disclosed herein, it becomes easier and more cost efficient to exchange components of the wind turbine, and the use of external equipment can be avoided. Furthermore, it becomes possible to exchange the component in weather conditions that would not allow to lift the component using an external crane. Accordingly, the down time of the wind turbine can be reduced.

## Claims

1. A method of providing a hoist system (30) for hoisting a wind turbine component (23) down from or up to a nacelle (20) of a wind turbine (10), wherein the nacelle (20) of the wind turbine (10) comprises an opening (22) in the lower part of the nacelle (20) to the outside, the method comprising the steps of:
- providing a winch (31),
- providing at least one deflection roller (32, 33) in the nacelle,
- guiding a winch cable (34) of the winch (31) through a tower (11) of the wind turbine (10) and through the nacelle (20) by means of the at least one deflection roller (32, 33),
- attaching the winch cable (34) to the wind turbine component (23), and
- lowering or raising the wind turbine component (23) through the opening (22) in the nacelle by means of the winch (31),
**characterised in that**
the method further comprises the step of attaching at least one spacer (35) to the wind turbine component (23), wherein the spacer (35) is adapted to maintain a minimum distance between the tower (11) of the wind turbine (10) and the wind turbine component (23) when the wind turbine component (23) is lowered or raised along the tower (11).

2. The method according to claim 2, wherein the spacer (35) comprises a roller, wherein the roller rolls along an outer surface of the tower (11) when the spacer (35) touches the tower during the lowering or raising of the wind turbine component.

3. The method according to any of the preceding claims, further comprising the step of pulling the winch cable (34) up to the nacelle (20) by means of a service crane or hoist mounted to the nacelle (20).

4. The method according to any of the preceding claims, wherein the opening is a hatch (22) arranged below the wind turbine component (23), the method further comprising the step of opening the hatch before lowering or raising the wind turbine component.

5. The method according to any of the preceding claims, further comprising the step of applying a force to the wind turbine component (23) or to the winch cable (34) attached thereto for increasing the distance between the tower (11) of the wind turbine and the wind turbine component (23) when lowering or raising the wind turbine component so as to enable the lowering or raising of the wind turbine component (23) to or from, respectively, a position spaced away from the base of the tower (11).

6. The method according to claim 5, wherein the force is applied by means of a pivotable arm (37) mounted to the tower (11) of the wind turbine or by means of a winch cable of a winch mounted on a vessel (40) or land vehicle that is located adjacent to the wind turbine (10).

7. A hoist system for hoisting a wind turbine component (23) down from or up to a nacelle (20) of a wind turbine (10), wherein the nacelle (20) of the wind turbine comprises an opening (22) in the lower part of the nacelle to the outside, the hoist system (30) comprising:
- a winch (31),
- at least one deflection roller (32, 33) mounted inside the nacelle (20), and
- a winch cable (34) of the winch (31), wherein the winch cable (34) is guided through a tower (11) of the wind turbine (10) and through the nacelle (20) by means of the at least one deflection roller (32, 33), the winch cable being attachable to the wind turbine component (23),
wherein the hoist system (30) is configured so as to enable a lowering or raising of the wind turbine component (23) through the opening (22) in the nacelle (20) by an operation of the winch (31),
**characterised in that**
the hoist system (30) further comprises at least one spacer (35) that is adapted to be mounted to the wind turbine component (23), wherein the spacer (35) further being adapted to maintain a minimum distance between the tower (11) of the wind turbine and the wind turbine component (23) when the wind turbine component is lowered or raised along the tower.

8. The hoist system according to claim 7, wherein the winch (31) is installed inside the tower (11) of the wind turbine, in particular at the base of the tower, or is installed outside the tower (11) of the wind turbine.

9. The hoist system according to any of claims 7 - 8, wherein hoist system (30) further comprises a deflection device (36) adapted to apply a force to the wind turbine component (23) or to the winch cable (34) attached thereto for increasing the distance between the tower (11) of the wind turbine and the wind turbine component (23) when lowering or raising the wind turbine component so as to enable the lowering or raising of the component to or from, respectively, a position spaced away from the base (12) of the tower (11).

10. The hoist system according to claim 9, wherein the deflection device (36) is a pivotable arm mounted to the tower (11) of the wind turbine or a winch mounted on a vessel or land vehicle that is located adjacent to the wind turbine (10) .

11. The hoist system according to any of claims 7 - 10, wherein the hoist system (30) comprises at least two deflection rollers (32, 33) mounted inside the nacelle (20) for guiding the winch cable (34).

12. The hoist system according to any of claims 7 - 11, wherein the opening in the nacelle (22) is arranged below a wind turbine component (23) to be lowered, and wherein the at least one deflection roller comprises a deflection roller (33) arranged above the wind turbine component (23) and a deflection roller (32) arranged above the upper end of the tower (11) of the wind turbine (10).

13. The hoist system according to any of claims 7 - 12, wherein the hoist system (30) is adapted to perform the method according to any of claims 2-7.

## Patentansprüche

1. Verfahren zum Bereitstellen eines Hebezugsystems (30) zum Herunterheben oder Hochheben einer Windkraftanlagenkomponente (23) von einer bzw. auf eine Gondel (20) einer Windkraftanlage (10), wobei die Gondel (20) der Windkraftanlage (10) eine Öffnung (22) im unteren Teil der Gondel (20) nach außen umfasst, wobei das Verfahren die folgenden Schritte aufweist:
- Bereitstellen einer Winde (31),
- Bereitstellen mindestens einer Umlenkrolle (32, 33) in der Gondel,
- Führen eines Windenkabels (34) der Winde (31) durch einen Turm (11) der Windkraftanlage (10) und durch die Gondel (20) hindurch mittels der mindestens einen Umlenkrolle (32, 33),
- Befestigen des Windenkabels (34) an der Windkraftanlagenkomponente (23), und
- Absenken oder Heben der Windkraftanlagenkomponente (23) durch die Öffnung (22) in der Gondel hindurch mittels der Winde (31),
**dadurch gekennzeichnet, dass**
das Verfahren ferner den Schritt des Befestigens mindestens eines Distanzstücks (35) an der Windkraftanlagenkomponente (23) umfasst, wobei das Distanzstück (35) dazu eingerichtet ist, einen minimalen Abstand zwischen dem Turm (11) der Windkraftanlage (10) und der Windkraftanlagenkomponente (23) aufrechtzuerhalten, wenn die Windkraftanlagenkomponente (23) entlang des Turms (11) abgesenkt oder gehoben wird.

2. Verfahren nach Anspruch 2, wobei das Distanzstück (35) eine Rolle umfasst, wobei die Rolle entlang einer Außenfläche des Turms (11) rollt, wenn das Distanzstück (35) den Turm während des Absenkens oder Hebens der Windkraftanlagenkomponente berührt.

3. Verfahren nach einem der vorhergehenden Ansprüche, welches ferner den Schritt des Hochziehens des Windenkabels (34) zu der Gondel (20) mittels eines Servicekrans oder Hebezugs, der an der Gondel (20) angebracht ist, umfasst.

4. Verfahren nach einem der vorhergehenden Ansprüche, wobei die Öffnung eine Luke (22) ist, die unter der Windkraftanlagenkomponente (23) angeordnet ist, wobei das Verfahren ferner den Schritt des Öffnens der Luke vor dem Absenken oder Heben der Windkraftanlagenkomponente umfasst.

5. Verfahren nach einem der vorhergehenden Ansprüche, welches ferner den Schritt des Anlegens einer Kraft an die Windkraftanlagenkomponente (23) oder das an dieser befestigte Windenkabel (34) zum Vergrößern des Abstands zwischen dem Turm (11) der Windkraftanlage und der Windkraftanlagenkomponente (23), wenn die Windkraftanlagenkomponente abgesenkt oder gehoben wird, umfasst, um das Absenken oder Heben der Windkraftanlagenkomponente (23) zu bzw. von einer Position zu ermöglichen, die von dem Fuß des Turms (11) beabstandet ist.

6. Verfahren nach Anspruch 5, wobei die Kraft mittels eines schwenkbaren Armes (37) angelegt wird, der an dem Turm (11) der Windkraftanlage angebracht ist, oder mittels eines Windenkabels einer Winde, die auf einem Schiff (40) oder Landfahrzeug angebracht ist, das sich an einem der Windkraftanlage (10) benachbarten Ort befindet.

7. Hebezugsystem zum Herunterheben oder Hochheben einer Windkraftanlagenkomponente (23) von einer bzw. auf eine Gondel (20) einer Windkraftanlage (10), wobei die Gondel (20) der Windkraftanlage eine Öffnung (22) im unteren Teil der Gondel nach außen umfasst, wobei das Hebezugsystem (30) umfasst:
- eine Winde (31),
- mindestens eine Umlenkrolle (32, 33), die innerhalb der Gondel angebracht ist, und
- ein Windenkabel (34) der Winde (31), wobei das Windenkabel (34) durch einen Turm (11) der Windkraftanlage (10) und durch die Gondel (20) hindurch mittels der mindestens einer Umlenkrolle (32, 33) geführt ist, wobei das Windenkabel an der Windkraftanlagenkomponente (23) befestigbar ist,
wobei das Hebezugsystem (30) dafür ausgebildet ist, das Absenken oder Heben der Windkraftanlagenkomponente (23) durch die Öffnung (22) in der Gondel (20) hindurch durch einen Betrieb der Winde (31) zu ermöglichen,
**dadurch gekennzeichnet, dass**
das Hebezugsystem (30) ferner mindestens ein Distanzstück (35) umfasst, welches dazu eingerichtet ist, an der Windkraftanlagenkomponente (23) angebracht zu werden, wobei das Distanzstück (35) ferner dazu eingerichtet ist, einen minimalen Abstand zwischen dem Turm (11) der Windkraftanlage und der Windkraftanlagenkomponente (23) aufrechtzuerhalten, wenn die Windkraftanlagenkomponente entlang des Turms abgesenkt oder gehoben wird.

8. Hebezugsystem nach Anspruch 7, wobei die Winde (31) innerhalb des Turms (11) der Windkraftanlage, insbesondere am Fuß des Turms, installiert ist oder außerhalb des Turms (11) der Windkraftanlage installiert ist.

9. Hebezugsystem nach einem der Ansprüche 7 - 8, wobei das Hebezugsystem (30) ferner eine Ablenkvorrichtung (36) umfasst, die dazu eingerichtet ist, eine Kraft an die Windkraftanlagenkomponente (23) oder das an dieser befestigte Windenkabel (34) zum Vergrößern des Abstands zwischen dem Turm (11) der Windkraftanlage und der Windkraftanlagenkomponente (23), wenn die Windkraftanlagenkomponente abgesenkt oder gehoben wird, anzulegen, um das Absenken oder Heben der Komponente zu bzw. von einer Position zu ermöglichen, die von dem Fuß (12) des Turms (11) beabstandet ist.

10. Hebezugsystem nach Anspruch 9, wobei die Ablenkvorrichtung (36) ein schwenkbarer Arm ist, der an dem Turm (11) der Windkraftanlage angebracht ist, oder eine Winde, die auf einem Schiff oder Landfahrzeug angebracht ist, das sich an einem der Windkraftanlage (10) benachbarten Ort befindet.

11. Hebezugsystem nach einem der Ansprüche 7 - 10, wobei das Hebezugsystem (30) mindestens zwei innerhalb der Gondel (20) angebrachte Umlenkrollen (32, 33) zum Führen des Windenkabels (34) umfasst.

12. Hebezugsystem nach einem der Ansprüche 7 - 11, wobei die Öffnung in der Gondel (22) unter einer abzusenkenden Windkraftanlagenkomponente (23) angeordnet ist und wobei die mindestens eine Umlenkrolle eine Umlenkrolle (33), die über der Windkraftanlagenkomponente (23) angeordnet ist, und eine Umlenkrolle (32), die über dem oberen Ende des Turms (11) der Windkraftanlage (10) angeordnet ist, umfasst.

13. Hebezugsystem nach einem der Ansprüche 7 - 12, wobei das Hebezugsystem (30) dazu eingerichtet ist, das Verfahren nach einem der Ansprüche 2 - 7 auszuführen.

## Revendications

1. Procédé de fourniture d'un système de levage (30) permettant de faire descendre un composant d'éolienne (23) d'une nacelle (20) d'une éolienne (10) ou de l'y faire monter, dans lequel la nacelle (20) de l'éolienne (10) comprend une ouverture (22) dans la partie inférieure de la nacelle (20) vers l'extérieur, le procédé comprenant les étapes :
- de fourniture d'un treuil (31),
- de fourniture d'au moins un rouleau de déviation (32, 33) dans la nacelle,
- de guidage d'un câble de treuil (34) du treuil (31) à travers un mât (11) de l'éolienne (10) et à travers la nacelle (20) au moyen de l'au moins un rouleau de déviation (32, 33),
- de fixation du câble de treuil (34) au composant d'éolienne (23), et
- d'abaissement ou de levage du composant d'éolienne (23) à travers l'ouverture (22) dans la nacelle au moyen du treuil (31)
**caractérisé en ce que**
le procédé comprend en outre l'étape de fixation d'au moins une entretoise (35) au composant d'éolienne (23), dans lequel l'entretoise (35) est adaptée pour maintenir une distance minimale entre le mât (11) de l'éolienne (10) et le composant d'éolienne (23) lorsque le composant d'éolienne (23) est abaissé ou levé le long du mât (11).

2. Procédé selon la revendication 2, dans lequel l'entretoise (35) comprend un rouleau, dans lequel le rouleau roule le long d'une surface extérieure du mât (11) lorsque l'entretoise (35) touche le mât au cours de l'abaissement ou du levage du composant d'éolienne.

3. Procédé selon l'une quelconque des revendications précédentes, comprenant en outre l'étape de traction du câble de treuil (34) jusqu'à la nacelle (20) au moyen d'une grue ou d'un appareil de levage de maintenance monté sur la nacelle (20) .

4. Procédé selon l'une quelconque des revendications précédentes, dans lequel l'ouverture est une trappe (22) agencée sous le composant d'éolienne (23), le procédé comprenant en outre l'étape d'ouverture de la trappe avant l'abaissement ou le levage du composant d'éolienne.

5. Procédé selon l'une quelconque des revendications précédentes, comprenant en outre l'étape d'application d'une force sur le composant d'éolienne (23) ou sur le câble de treuil (34) qui y est fixé afin d'augmenter la distance entre le mât (11) de l'éolienne et le composant d'éolienne (23) lors de l'abaissement ou du levage du composant d'éolienne de manière à permettre l'abaissement ou le levage du composant d'éolienne (23) vers ou depuis, respectivement, une position éloignée de la base du mât (11).

6. Procédé selon la revendication 5, dans lequel la force est appliquée au moyen d'un bras pivotant (37) monté sur le mât (11) de l'éolienne ou au moyen d'un câble de treuil d'un treuil monté sur un bateau (40) ou un véhicule terrestre qui est positionné de manière adjacente à l'éolienne (10).

7. Système de levage permettant de faire descendre un composant d'éolienne (23) d'une nacelle (20) d'une éolienne (10) ou de l'y faire monter, dans lequel la nacelle (20) de l'éolienne comprend une ouverture (22) dans la partie inférieure de la nacelle vers l'extérieur, le système de levage comprenant :
- un treuil (31),
- au moins un rouleau de déviation (32, 33) monté à l'intérieur de la nacelle (20), et
- un câble de treuil (34) du treuil (31), dans lequel le câble de treuil (34) est guidé à travers un mât (11) de l'éolienne (10) et à travers la nacelle (20) au moyen de l'au moins un rouleau de déviation (32, 33), le câble de treuil étant fixable au composant d'éolienne (23),
dans lequel le système de levage (30) est configuré de manière à permettre un abaissement ou un levage du composant d'éolienne (23) à travers l'ouverture (22) dans la nacelle (20) par un actionnement du treuil (31),
**caractérisé en ce que**
le système de levage (30) comprend en outre au moins une entretoise (35) qui est adaptée pour être montée sur le composant d'éolienne (23), dans lequel l'entretoise (35) est en outre adaptée pour maintenir une distance minimale entre le mât (11) de l'éolienne et le composant d'éolienne (23) lorsque le composant d'éolienne est abaissé ou levé le long du mât.

8. Système de levage selon la revendication 7, dans lequel le treuil (31) est installé à l'intérieur du mât (11) de l'éolienne, en particulier à la base du mât, ou est installé à l'extérieur du mât (11) de l'éolienne.

9. Système de levage selon l'une quelconque des revendications 7 à 8, dans lequel le système de levage (30) comprend en outre un dispositif de déviation (36) adapté pour appliquer une force sur le composant d'éolienne (23) ou sur le câble de treuil (34) qui y est fixé afin d'augmenter la distance entre le mât (11) de l'éolienne et le composant d'éolienne (23) lors de l'abaissement ou du levage du composant d'éolienne de manière à permettre l'abaissement ou le levage du composant vers et depuis, respectivement, une position éloignée de la base (12) du mât (11).

10. Système de levage selon la revendication 9, dans lequel le dispositif de déviation (36) est un bras pivotant monté sur le mât (11) de l'éolienne ou un treuil monté sur un bateau ou un véhicule terrestre qui est positionné de manière adjacente à l'éolienne (10).

11. Système de levage selon l'une quelconque des revendications 7 à 10, dans lequel le système de levage (30) comprend au moins deux rouleaux de déviation (32, 33) montés à l'intérieur de la nacelle (20) pour guider le câble de treuil (34) .

12. Système de levage selon l'une quelconque des revendications 7 à 11, dans lequel l'ouverture (22) dans la nacelle est agencée sous un composant d'éolienne (23) à abaisser, et dans lequel l'au moins un rouleau de déviation comprend un rouleau de déviation (33) agencé au-dessous du composant d'éolienne (23) et un rouleau de déviation (32) agencé au-dessus de l'extrémité supérieure du mât (11) de l'éolienne (10).

13. Système de levage selon l'une quelconque des revendications 7 à 12, dans lequel le système de levage (30) est adapté pour réaliser le procédé selon l'une quelconque des revendications 2 à 7.
